(19) Europäisches Patentamt
European Patent Office
Office européen des brevets

(11) Veröffentlichungsnummer: **0 002 722**
**B1**

(12) **EUROPÄISCHE PATENTSCHRIFT**

(21) Anmeldenummer: **78101654.8**

(22) Anmeldetag: **13.12.78**

(51) Int. Cl.³: **B 01 F 17/00, D 06 M 13/00, B 01 F 17/22, C 07 C 103/00**

# (54) Kationische Emulgatoren, ihre Verwendung zur Herstellung von Kohlenwasserstoffemulsionen sowie deren Verwendung zur Textilbehandlung

(30) Priorität: **24.12.77 DE 2757916**

(43) Veröffentlichungstag der Anmeldung:
**11.07.79 Patentblatt 79/14**

(45) Bekanntmachung des Hinweises auf die Patenterteilung:
**17.09.80 Patentblatt 80/19**

(84) Benannte Vertragsstaaten:
**DE FR GB IT NL**

(56) Entgegenhaltungen:
**DE - A - 2 621 881**
**US - A - 2 531 190**

(73) Patentinhaber: **BAYER AG**
**Zentralbereich Patente, Marken und Lizenzen**
**D - 5090 Leverkusen 1, Bayerwerk (DE)**

(72) Erfinder: **Kolbe, Joachim, Dr.**
**Domblick 23**
**D - 5090 Leverkusen 31 (DE)**
**Kortmann, Wilfried**
**Auf dem Dreische 3**
**D - 5800 Hagen 5-Hohenlimburg (DE)**
**Luxem, Hans**
**Rungestrasse 16**
**D - 5000 Köln 80 (DE)**

**EP 0 002 722 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Kationische Emulgatoren, ihre Verwendung zur Herstellung von Kohlenwasserstoffemulsionen sowie deren Verwendung zur Textilbehandlung

Gegenstand der Erfindung sind kationische Emulgatoren, die

a) 5—70 Gew. % eines Fettsäureamids der allgemeinen Formel

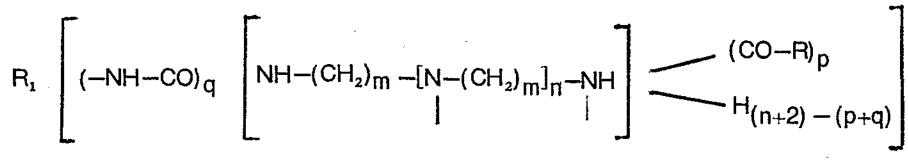

(I)

worin

R für einen $C_{12}$—$C_{22}$-Alkylrest,

$R_1$ für einen ein-oder zweiwertigen, ggf. durch Halogen oder $C_1$—$C_4$-Alkyl substituierten Alkyl-, ggf. durch Halogen oder $C_1$—$C_4$-Alkyl substituierten Cycloalkyl-, Aralkyl-oder Arylrest,

m für 2 oder 3,

n für 1—4,

p für einen Wert zwischen 1,8 und 6,3,

q für einen Wert zwischen 0,25 und 0,5 und

r für 1 oder 2 stehen,

b) 20—50 Gew.-% eines nichtionogenen Emulgators,

c) 0—10 Gew.-% eines quaternären Ammoniumsalzes und

d) 5—20 Gew.-% einer aliphatischen Carbonsäure

enthalten, und ihre Verwendung zur Herstellung von wäßrigen Emulsionen von flüssigen und festen Kohlenwasserstoffen, Estern und Wachsen.

$R_1$ kann beispielsweise für einen ggf. durch Halogen oder $C_1$—$C_4$-Alkoxy substituierten $C_1$—$C_{18}$-Alkylrest, einen $C_4$—$C_8$-Alkylenrest, einen ggf. durch $C_1$—$C_4$-Alkyl oder Halogen substituierten Cyclohexyl-, Cyclohexylen-, Benzyl-, Xylylen-, Phenyl-, Phenylen-, Bisphenylenmethan- oder Bisphenylenpropan-Rest stehen. Besonders vorteilhaft sind Reaktionsprodukte aus Hexamethylen-diisocyanat, m-Xylylen-diisocyanat und Toluylen-diisocyanat-(2,4). Verbindungen der Formel (I) sind in der DE—AS 2 206 302 beschrieben.

Beispiele für die der Formel (I) zugrunde liegenden Amide sind die Umsetzungsprodukte von 2,4 Mol Behensäure mit 1 Mol Triethylentetramin, 1,8 Mol Behensäure mit 1 Mol Diethylentriamin, 2,6 Mol Stearinsäure mit 1 Mol Triethylentetramin, 2,4 Mol eines Fettsäuregemisches mit mittlerem Molgewicht 334 (2% C 24-; 80% C 22-; 13% C 20-; 5% C 18- und 1% C 16-Fettsäure) mit 1 Mol Triethylentetramin, 3,0 Mol des genannten Fettsäuregemisches mit 1 Mol Tetraethylenpentamin sowie 3,6 Mol des gleichen Fettsäuregemisches mit 1 Mol Pentaethylenhexamin.

Die erfindungsgemäßen kationischen Emulgatoren können darüber hinaus auch Amide enthalten, die durch Umsetzung von gesättigten oder ungesättigten Carbonsäuren mit einer Kettenlänge von 10—22 Kohlenstoffatomen mit Diaminen mit einer primären und tertiären Aminogruppe hergestellt werden.

Die Amine leiten sich vorzugsweise von $C_2$—$C_4$-Alkylendiaminen ab, deren tertiäres Stickstoffatom durch ggf. hydroxyliertes $C_1$—$C_4$-Alkyl substituiert ist.

Bevorzugte Amide dieser Art sind solche der Formel

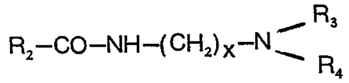

(II)

worin

$R_2$ einen $C_9$—$C_{21}$-Alkyl oder -Alkylenrest,

$R_3$ und $R_4$ Methyl, Ethyl, Hydroxyethyl, Propyl oder 2-Hydroxypropyl und

x 2,3 oder 4 bedeuten.

Als Beispiele seien genannt die Umsetzungsprodukte von Carbonsäurenas wie Laurinsäure, Myristinsäure, Palmitinsäure, Stearinsäure, Behensäure oder hydrierte tierische und pflanzliche Fettsäuren, oder ungesättigte Fettsäuren wie Ölsäure, sowie Mischungen von Fettsäuren, wie sie bei der Verseifung tierischer oder pflanzlicher Fette und Öle, z.B. Baumwollsaatöl, Sojaöl, Erdnußöl, Fischöl, hydriertes Erdnußöl, hydriertes Sojaöl oder hydriertes Fischöl erhältlich sind, mit Diaminen, wie 3-Amino-1-dimethylamino-propan, 3-Amino-1-diäthyl-amino-propan, 3-Amino-1-dihydroxyathylamino-propan

oder 2-Methyl-(3-aminopropyl)-amino-äthanol. Geeignete Amide (II) sind beispielsweisse aus der DE—PS 1 102 096 bekannt.

Ein vorteilhaftes Gewichtsverhältnis der erstgenannten Amide, z.B. der Amide (I), zu den letztgenannten Amiden, z.B. (II), beträgt 2—6:1.

Die nichtionogenen Emulgatoren (b) sind beispielsweise bei K. Lindner "Tenside Textilhilfsmittel Waschrohstoffe", Band I, (1964) Seite 865 bis 916 beschrieben. Besonders haben sich Polyglykolätherderivate, die sich beispielsweise von Fettalkoholen, Fettsäuren, Fettaminen oder Alkylphenolen ableiten, bewährt. Der Oxäthylierungsgrad liegt vorteilhaft zwischen 3 und 30 Mol Äthylenoxid. Bevorzugt werden Oxäthylierungsprodukte von gesättigten und ungesättigten Fettalkoholen.

Geeignete quaternäre Verbindungen (c) sind beispielsweise bei K. Lindner l.c., 983—995 beschrieben. Als Beispiele seien N-Hexadecyl-pyridinium-bromid, N-Tetradecyl-N-dimethyl-N-benzyl-ammoniumchlorid oder N-Distearyl-N-dimethyl-ammoniumchlorid genannt.

Als Carbonsäuren (d) kommen insbesondere Ameisensäure oder $C_1$—$C_2$-Alkylcarbonsäuren, die durch Hydroxylgruppen substituiert sein können, in Betracht.

Die erfindungsgemäßen Emulgatoren finden Verwendung bei der Herstellung von wäßrigen Emulsionen von festen und flüssigen Kohlenwasserstoffen, festen und flüssigen Estern und Wachsen.

Das Mengenverhältnis von zu emulgierender Substanz zu kationsischem Emulgator beträgt 50:50 bis 80:20, vorzugsweise 60:40 bis 70:30.

Gegenstand der Erfindung sind auch die mit Hilfe der erfindungsgemäßen Emulgatoren hergestellten Emulsionen und ihre Verwendung zur Textilbehandlung.

Diese Emulsionen sind als Hilfsmittel, insbesondere als Gleitmittel, auf den verschiedensten Gebieten der Textilbehandlung verwendbar. Sie werden nach bekannten Verfahren nach Auszieh- oder Klotzverfahren auf das Textilmaterial aufgebracht.

Die Emulsionen finden beispielsweise Verwendung bei der Herstellung der synthetischen Fasern, wo sie als Spinnpräparationen den frisch gesponnenen Fäden die notwendige Glätte und ein antielektrostatisches Verhalten verleihen. Zu diesem Zweck sind besonders Emulsionen von flüssigen Kohlenwasserstoffen, wie Paraffinölen oder von "Esterölen", wie sie durch Veresterung von Carbonsäuren und Dicarbonsäuren mit Alkoholen erhalten werden, wobei die Gesamtzahl der C-Atomer zwischen 20 und 40 liegt, geeignet. Beispiele für solche Öle sind Butylstearat, Butyloleat, 2-Äthylhexylstearat oder Di-2-äthylhexyl-sebacat.

Derartige Emulsionen eignen sich zum Präparieren von Polyamid- und Polyesterfilamenten, die sowohl nach den üblichen Spinn- und Streckverfahren als auch nach dem Schnellspinnverfahren mit dem Ziel vororientierter Garne (POY) hergestellt werden.

Die Emulsionen werden in vorteilhafter Weise auf den Fäden oder Fädensträngen unmittelbar nach Verlassen der Spinnduse aufgetragen. Die Applikation kann nach den üblichen Verfahren wie Aufsprühen, über Auftragswalzen oder durch Vorbeiführen des Fadens an Schlitzen, die mit der Emulsion gespeist wurden, erfolgen, Üblicherweise werden diese Einrichtungen so betrieben, daß je nach Einsatzgebiet Präparationsauflagen von 0,1—2,0%, erzielt wurden.

Daneben lassen sich die Emulsionen auch in der Sekundärspinnerei und bei der Herstellung textiler Flächengebilde einsetzen, um den Garnen einen konstant niedrigen Reibungskoeffizienten zu vermitteln. In diesen Fällen handelt es sich vorzugsweise um Emulsionen von solchen festen Paraffinkohlenwasserstoffen, wie man sie üblicherweise bei der Trockenparaffinierung verwendet.

Hierbei wird vorzugsweise nach dem Ausziehverfahren im Anschluß an das Färbebad gearbeitet, wobei in der Regel mit Flottenkonzentrationen von 1—4 g/l gearbeitet wird. Die Einsatzmengen werden dabei so bemessen, daß eine Auflage von 0,3—1,2% auf dem Faden resultiert.

Die erfindungsgemäßen Emulgatoren können auf einfache Weise durch gemeinsames Erhitzen der Bestandteile, z.B. Erhitzen unter Rückfluß erhalten werden. Es handelt sich um wachsartige produkte.

Die Emulsionen lassen sich in einfacher Weise dadurch herstellen, daß man das Emulgatorengemisch gemeinsam mit dem zu emulgierenden Stoff auf 80 bis 90°C erwärmt und die entstandene Schmelze unter Rühren in die entsprechende Menge vollentsalztes Wasser von 90°C gibt und unter Rühren abkühlt. Möglich ist auch das umgekehrte Verfahren, indem man das heiße Wasser in die heiße Schmelze drückt. Vorzugsweise wird aber nach dem erstgenannten Verfahren gearbeitet.

Aus der DE—OS 2 621 881 sind Glättemittel für Textilfasermaterial auf der Basis von wäßrigen Fettsäureester-Paraffin-Emulsionen bekannt. Diese Emulsionen enthalten Mischungen, die die erfindungsgemäßen Emulgator-Bestandteile enthalten können mit dem Unterschied, daß an Stelle der Harnstoff-Derivate der Formel (I) Harnstoffgruppen-freie Carbonsäureamide eingesetzt werden. Perlon-Filamente, die mit erfindungsgemäßen wäßrigen Paraffin-Emulsionen behandelt werden, zeigen gegenüber Perlon-Filamenten, die mit entsprechenden wäßrigen Paraffin-Emulsionen, die ein aus der DE—OS 2 621 881 bekanntes Carbonsäureamid enthalten, behandelt werden, eine überraschend niedrige Haft- und Gleitreibung.

Beispiel 1

Herstellung einer Emulgator-Mischung

86,3 kg des Amids nach Beispiel 2, 20,0 kg des basischen Amids nach Beispiel 3, 43,6 kg des

Umsetzungsproduktes von techn. Laurylalkohol (mittl. Molgew. 206; Gemisch aus 3 = C 10-, 55% C 12-, 21% C 14-, 11% C 16- und 10% C 18-Alkohol) mit 5 Mol Äthylenoxid, 4,2 kg des Umsetzungsproduktes von Oleylalkohol mit 20 Mol Äthylenoxid, 5,2 kg N-Tetradecyl-N,N-dimethy-N-benzylammoniumchlorid, 23,2 kg Essigsäure und 4,2 kg Stearinsäure werden in einem mit Rückfluß versehenen Gefäß bei 100°C zu einer homogenen Schmelze verrührt. Nach dem Abkühlen wird ein schwach gefärbtes, wachsartiges Produkt erhalten.

Beispiel 2

Herstellung eines Carbonsäureamids der Formel (I)

64,3 kg techn. Behensäure (mittl. Molgew. 334; Gemisch aus 2% C 24-, 80% C 22-, 12% C 20-, 5% C 18- und 1% C 16-Fettsäure) werden in einer Stickstoffatmosphäre geschmolzen. Zu der auf 180—185°C erwärmten Schmelze werden unter Rühren und Abdestillieren des sich bildenden Reaktionswassers innerhalb von 20 Min. 11,7 kg Triäthylentetramin getropft. Anschließend wird das Reaktionsgemisch 2 Stunden lang im Vakuum (60 Torr) bei gleicher Temperatur gerührt. Ausbeute 71,7 kg eines hellgelben, wachsartigen Produktes. Säurezahl: 7,5.

In die auf 110—115°C abgekühlte Schmelze werden unter Stickstoff 3,1 kg Hexamethylendiisocyanat getropft, wobei die Temperatur zwischen 111 und 118°C liegen soll. Nach Beendigung der Isocyanatzugabe wird das Reaktionsgemisch noch 15 Min. lang bei der gleichen Temperatur gerührt und anschließend auf 80°C abgekühlt.

Danach werden unter Rühren und Rückflußkühlung 11,5 kg Essigsäure zugegeben und 30 Min. lang verrührt. Es werden 86,3 kg eines bernsteinfarbenen, wachsartigen Reaktionsproduktes erhalten.

Beispiel 3

Herstellung eines Carbonsäureamids der Formel (II)

27,0 kg technischer Stearinsäure (mittl. Molgewicht 270; Gemisch aus 3% C 14-, 29% C 16-, 67% 18- und 1% Ölsäure) werden unter Stickstoff auf 180°C erwärmt. Unter Rühren werden 10,2 kg 3-Amino-1-dimethylamino-propan zugetropft wobei das Reaktionswasser abdestilliert. Anschließend wird das Reaktionsgemisch 2 Stunden lang bei 180°C unter Normaldruck und anschließend 2 Stunden lang im Vakuum (60 Torr) gerührt. Nach dem Abkühlen werden 35,4 kg eines schwach gefärbten Wachses mit einer Säurezahl von 0,8 erhalten.

Beispiel 4

Herstellung und Verwendung einer Emulsion

22,5 kg eines aromatenarem Paraffinöles ($n_D^{20}$: 1,4700; $D^{20}$: 0,850; Viskosität 20°C: 33 cp) und 11,0 kg obiger Emulgator-Mischung nach Beispiel 1 werden in einem mit Rückfluß versehenen Gefäß aufgeschmolzen und auf 95°C erwärmt. Es entsteht eine klare Schmelze. Gleichzeitig werden in einem zweiten Gefäß 66,5 kg vollentsalztes Wasser auf 90°C erwärmt. Nun drückt man die Schmelze unter Rühren in das vorgelegte Wasser, worauf sich eine homogene Emulsion bildet. Nach dem Abkühlen auf Raumtemperatur erhält man eine flüssige, stabile Emulsion, die sich durch Zugabe von Wasser beliebig verdünnen läßt. Die Emulsion zeigt nach der Schleuderprobe (30 Min. Laborzentrifuge, 3000 U/Min) keinerlei Phasenabtrennung. Eine Verdünnung mit Wasser von 50°C im Verhältnis 1:99 zeigt eine Durchlässigkeit von 57%.

Tragt man diese Emulsion bei Raumtemperatur nach dem Verdünnen auf einen Wassergehalt von 85% mittels Galetten direkt nach dem Verlassen des Spinnschachtes auf ein Polyamidfilament mit einem Gesamttiter von 940 dtex und 140 Einzelkapillaren auf, so erhält man einen guten Spulenaufbau und bei der anschließenden Verstreckung ein sehr gute Streckausbeute von über 90%.

Beispiel 5

Herstellung und Verwendung einer Emulsion

65,0 kg 2-Äthylhexyl-stearat und 35,0 kg der erfindungsgemäßen Emulgator-Mischung nach Beispiel 1 werden in einem Rührgefäß mit Rückflußeinrichtung aufgeschmolzen und auf 90°C erwärmt. Die klare Schmelze wird unter Rühren in ein zweites Gefäß, welches 100 kg vollentsalztes Wasser von 90°C enthält, gedrückt, wobei sich eine homogene Emulsion bildet. Nach dem Abkühlen auf Raumtemperatur wird eine trübe Emulsion erhalten, die sich beliebig mit Wasser verdünnen läßt. Nach der Schleuderprobe (Laborzentrifuge, 30 Minuten, 3000 U/Min.) läßt sich keine Phasenabtrennung feststellen. Eine Verdünnung mit Wasser im Verhältnis 1:99 zeigt eine Durchlässigkeit von 78%.

Trägt man die Emulsion bei Raumtemperatur in 14%iger Form mit Hilfe der Einwegpräpariertechnik auf ein Polyesterfilament mit einem Gesamttiter von 145 dtex und 34 Einzelkapillaren in der Weise auf, daß ein Präparationsauftrag von 0,3% resultiert, so läßt sich das Material nach dem sogenannten Spinnstreck-Verfahren verarbeiten, ohne daß es zu Flusenbildung und Kapillarbrüchen kommt.

Beispiel 6

Herstellung und Verwendung einer Emulsion

22,0 kg Tafelparaffin, Fp 52—54°C, und 11,0 kg der erfindungsgemäßen Emulgatormischung nach Beispiel 1 werden in einem mit Rückflußeinrichtung versehenen Gefäß aufgeschmolzen und auf

95°C erwärmt. Es bildet sich eine klare Schmelze. In einem zweiten Gefäß werden gleichzeitig 67,0 kg vollentsalztes Wasser auf 95°C erwärmt. Drückt man die Schmelze rasch unter Rühren in das vorgelegte Wasser, so entsteht eine homogene Emulsion, deren Viskosität sich beim Abkühlen erniedrigt.

Die trübe, stabile Emulsion hat eine Durchlaufzeit im Fordbecher (Düse 4 mm) von 35 Sec/50 g. Die Durchlässigkeit einer Verdünnung mit Wasser von 50°C im Verhältnis 1:99 beträgt 72%.

In einem Färbeapparat mit 500 l Flotte werden 20 kg Stranggarn Polyacrylnitril/Wolle 70/30 ungefärbt bei 45°C, pH 6 mit 2% der obigen Emulsion 20 Min. lang behandelt. Die Flotte ist während der Behandlungszeit stabil, es treten keine Abscheidungen von Paraffin auf. Nach 15 Min. ist das Bad klar ausgezogen. Bei einer erzielten Auflage von 0,6% beträgt der Reibungskoeffizient des Garnes 0,13 gegenüber 0,19 ohne Avivage. Das Garn zeigt ausgezeichnete Laufeigenschaften bei der Weiterverarbeitung, darüber hinaus einen angenehm weichen Griff, so daß sich eine zusätzliche Behandlung mit einem Textilweichmacher erübrigt.

## Patentansprüche

1. Kationischer Emulgator, der 5—70 Gew.-% eines Fettsäureamides der allgemeinen Formel

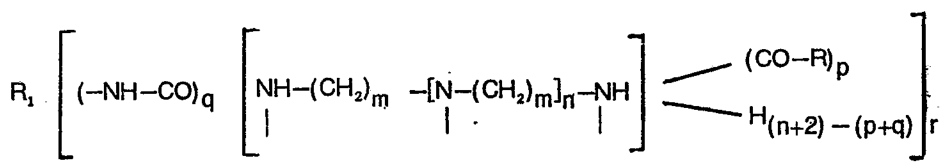

(I)

worin

R für einen $C_{12}$—$C_{22}$-Alkylrest,
$R_1$ für einen ein- oder zweiwertigen, ggf. durch Halogen oder $C_1$—$C_4$-Alkyl substituierten Alkyl-, ggf. durch Halogen oder $C_1$—$C_4$-Alkyl substituierten Cycloalkyl-, Aralkyl-oder Arylrest,
m für 2 oder 3,
n für 1—4,
p für einen Wert zwischen 1,8 und 6,3,
q für einen Wert zwischen 0,25 und 0,5 und
r für 1 oder 2 stehen,

20—50 Gew.-% eines nichtionogenen Emulgators
0—10 Gew.-% eines quaternären Ammonium salzes und
5—20 Gew.-% einer aliphatischen Carbonsäure

enthält.

2. Kationischer Emulgator nach Anspruch 1, dadurch gekennzeichnet, daß er zusätzlich ein Amid der Formel

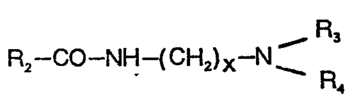

(II)

enthalten kann,
worin

$R_2$ einen $C_9$—$C_{21}$-Alkyl oder -Alkylenrest,
$R_3$ und $R_4$ Methyl, Ethyl, Hydroxyethyl, Propyl oder 2-Hydroxypropyl und
x 2, 3 oder 4

bedeuten.

3. Kationischer Emulgator nach Anspruch 1, dadurch gekennzeichnet, daß er als nichtionogenen Emulgator ein Polyglykoletherderivat eines Fettalkohols, einer Fettsäure, eines Fettamins oder eines Alkylphenols, enthält.

4. Verwendung des kationischen Emulgators nach Anspruch 1 zur Herstellung von wäßrigen Emulsionen von festen und flüssigen Kohlenwasserstoffen, festen und flüssigen Estern und Wachsen.

5. Wäßrige Emulsionen von festen und flüssigen Kohlenwasserstoffen, festen und flüssigen Estern und Wachsen, die einen kationischen Emulgator nach Anspruch 1 enthalten.

6. Verwendung der Emulsionen nach Anspruch 5 zur Textilbehandlung.

**Claims**

1. Cationic emulsifier which contains 5—70% by weight of a fatty acid amide of the general formula

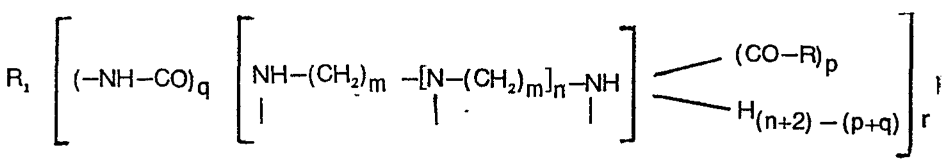

(I)

wherein

R denotes a $C_{12}$—$C_{22}$ alkyl radical,

$R_1$ denotes a monovalent or divalent alkyl radical optionally substituted by halogen or $C_1$—$C_4$ alkyl, a monovalent or divalent cycloalkyl radical optionally substituted by halogen or $C_1$—$C_4$ alkyl, a monovalent or divalent aralkyl radical or a monovalent or divalent aryl radical,

m denotes 2 or 3,

n denotes 1—4,

p denotes a value between 1.8 and 6.3,

q denotes a value between 0.25 and 0.5 and

r denotes 1 or 2,

20—50% by weight of a non-ionic emulsifier, 0—10% by weight of a quaternary ammonium salt and 5—20% of an aliphatic carboxylic acid.

2. Cationic emulsifier according to Claim 1, characterised in that it can additionally contain an amide of the formula

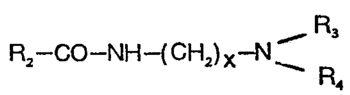

(II)

wherein

$R_2$ denotes a $C_9$—$C_{21}$ alkyl or a $C_9$—$C_{21}$ alkylene radical,

$R_3$ and $R_4$ denote methyl, ethyl, hydroxyethyl, propyll or 2-hydroxypropyl and

x denotes 2, 3 or 4.

3. Cationic emulsifier according to Claim 1, characterised in that it contains a polyglycol ether derivative of a fatty alcohol, a fatty acid, a fatty amine or an alkylphenol as the non-ionic emulsifier.

4. Use of the cationic emulsifier according to Claim 1 for the preparation of aqueous emulsions of solid and liquid hydrocarbons, solid and liquid esters and waxes.

5. Aqueous emulsions of solid and liquid hydrocarbons, solid and liquid esters and waxes, which contain a cationic emulsifier according to Claim 1.

6. Use of the emulsions according to Claim 5 for the treatment of textiles.

**Revendications**

1. Agent émulsionnant cationique, qui contient 5 à 70% en poids d'un amide d'acides gras répondant à la formule générale:

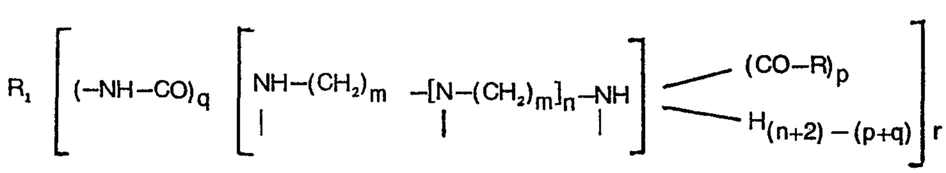

(I)

dans laquelle:

R représente un radical alkyle en $C_{12}$—$C_{22}$,

$R_1$ représente un radical mono- ou divalent alkyle éventuellement substitué par des halogènes ou

des groupes alkyle en $C_1$—$C_4$, cycloalkyle, aralkyle ou aryle éventuellement substitués par des halogènes ou des groupes alkyle en $C_1$—$C_4$,
m est égale à 2 ou 3,
n a une valeur de 1 à 4,
p a une valeur de 1,8 à 6,3,
q a une valeur de 0,25 à 0,5 et
r est égal à 1 ou 2,

20 à 50% en poids d'un agent émulsionnant non ionique,
0 à 10% en poids d'un sel d'ammonium quaternaire et
5 à 20% en poids d'un acide carboxylique aliphatique.

2. Agent émulsionnant cationique selon la revendication 1, caractérisé en ce qu'il peut contenir en outre un amide de formule:

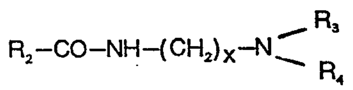

(II)

dans laquelle $R_2$ représente un radical alkyle ou alkylène en $c_9$—$C_{21}$, $R_3$ et $R_4$ représentent des groupes méthyle, éthyle, hydroxyéthyle, propyle ou 2-hydroxypropyle et x est égal à 2, 3 ou 4.

3. Agent émulsionnant cationique selon la revendication 1, caractérisé en ce qu'il contient, en tant qu'agent émulsionnant non ionique, un dérivé d'éther de polyglycol d'un alcool gras, d'un acide gras, d'une amine grasse ou d'un alkylphénol.

4. Utilisation de l'agent émulsionnant cationique selon la revendication 1, pour la préparation d'émulsions aqueuses d'hydrocarbures solides et liquides, d'esters solides et liquides et de cires.

5. Emulsions aqueuses d'hydrocarbures solides et liquides, d'esters solides et liquides et de cires, qui contiennant un agent émulsionnant cationique selon la revendication 1.

6. Utilisation des émulsions selon la revendications 5 pour le traitement des textiles.